# EUROPÄISCHE PATENTSCHRIFT

(11) **EP 1 085 343 B1**
(45) Veröffentlichungstag und Bekanntmachung des Hinweises auf die Patenterteilung: **04.10.2006**
(21) Anmeldenummer: 00115526.6
(22) Anmeldetag: 19.07.2000
(51) Int. Cl.: G01S 5/14, G01S 5/00

(54) **Empfangssystem zur GPS-Positionierung unter Verwendung der Azimuth-Distance-Correction (ADCo)**
Receiver system for GPS positioning using azimuth-distance correction
Système de réception pour la détermination de position à GPS en utilisant la correction distance-angle de site

(30) Priorität: 16.09.1999 DE 19946106
(43) Veröffentlichungstag der Anmeldung: 21.03.2001
(73) Patentinhaber: Deutsche Telekom AG, 53113 Bonn (DE)
(72) Erfinder: Andress, Ralph Petersen, 01705 Freital (DE); Huberty, Manfred, 54318 Mertesdorf (DE); Dittrich, Johannes, Dr., 14482 Potsdam (DE); Kühmstedt, Elke, 14473 Potsdam (DE)

(56) Entgegenhaltungen:
- DE-A- 19 538 876
- US-A- 5 748 651
- US-A- 5 877 725
- US-A- 5 884 220
- WWW.POTSDAM.IFAG.DE: "ALF/Technik" INTERNETSEITE, [Online] 4. Juli 1998 (1998-07-04), XP002264063 Gefunden im Internet: <URL:web.archive.org/web/19980704222957/ww w.potsdam.ifag.de/alf/technik.html> [gefunden am 2003-12-05]
- VAN WILLIGEN D ET AL: "EUROFIX: definition and current status" POSITION LOCATION AND NAVIGATION SYMPOSIUM, IEEE 1998 PALM SPRINGS, CA, USA 20-23 APRIL 1998, NEW YORK, NY, USA,IEEE, US, 20. April 1998 (1998-04-20), Seiten 101-108, XP010276841 ISBN: 0-7803-4330-1
- NAGLE J R: "Wide area differential corrections (WADC) from global beam satellites" 500 YEARS AFTER COLUMBUS - NAVIGATION CHALLENGES OF TOMORROW. MONTEREY, CA., MAR. 23 - 27, 1992, PROCEEDINGS OF THE POSITION LOCATION AND NAVIGATION SYMPOSIUM (PLANS), NEW YORK, IEEE, US, 23. März 1992 (1992-03-23), Seiten 383-390, XP010056460 ISBN: 0-7803-0468-3

## Beschreibung

Die Erfindung bezieht sich auf ein Empfangssystem zur GPS-Positionierung unter Verwendung der Azimuth-Distance-Correction, bei dem Erkenntnisse zur Genauigkeitssteigerung von DGPS-Messungen in Abhängigkeit von der Entfernung zur Referenzstation und vom Azimut verwendet werden.

Es ist Stand der Technik, mit der differentiellen Technik die Genauigkeit von GPS-Positionsmessungen (global positioning system) wesentlich zu verbessern (DGPS "differential GPS").Im DGPS-Mode unterscheidet man Code- und Phasenlösungen.
Ein bekanntes DGPS-System besteht mindestens aus der Referenzstation und dem Nutzer. Die vorhandenen DGPS-Systeme/-Dienste unterscheiden sich hinsichtlich der Datenübertragung von der Referenzstation zum Nutzer. Z.B. arbeiten diese bekannten Datenübertragungssysteme auf der Basis von Langwellen (LW) und Ultrakurzwellen (UKW).
Auf der Referenzstation werden die DGPS-Korrekturdaten erzeugt. Auf der Nutzerseite werden für den Empfang der Daten dem Datenübertragungsweg angepaßte DGPS-Korrekturdatenempfänger verwendet. Diese Empfänger geben die DGPS-Korrekturdaten über eine Schnittstelle an den DGPS-fähigen GPS-Empfänger des Nutzers weiter. Der GPS-Empfänger des Nutzers benutzt diese DGPS-Korrekturdaten bei seiner Berechnung der Positionslösung. Die Ausgabe der korrigierten Position erfolgt durch den GPS-Empfänger des Nutzers **[www.potsdam.ifag.de, "ALF/Technik", XP002264063, 4. Juli 1998].**

Aufgabe der Erfindung ist es, ein Empfangssystem der eingangs genannten Art zu schaffen, das auf der Basis von GPS-Codelösungen, die mit ALF (Accurate Positioning by Low Frequency) gemessenen DGPS-Positionen weiter verbessert, und damit die aufgetretenen Abweichungen vom Sollwert verringert.

Ein Ausführungsbeispiel der Erfindung soll anhand der Zeichnungen näher erläutert werden. Die Zeichnungen zeigen in:
- Fig. 1:: die schematische Darstellung des Empfangssystems,
- Fig. 2:: eine Darstellung der Referenzstation und der geodätischen Meßpunkte,
- Fig. 3:: die Darstellung der Korrekturlinie.

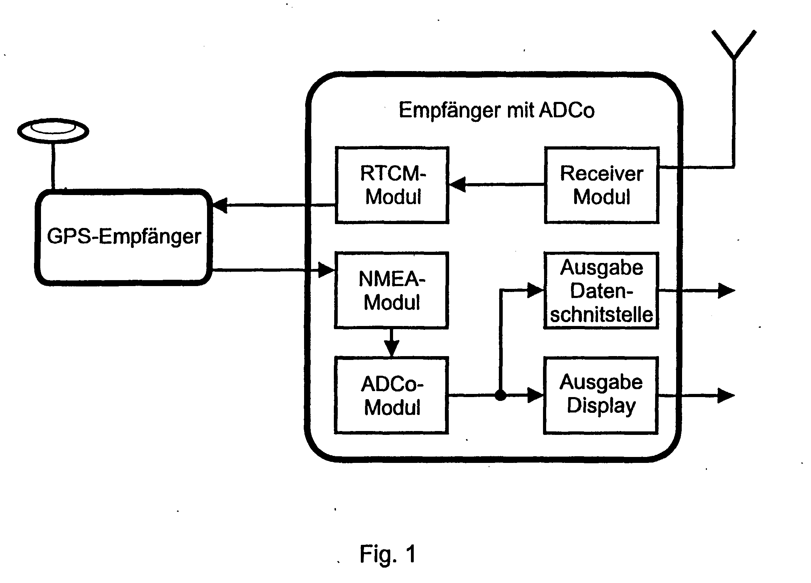

Nach Fig. 1 werden von einer Referenzstation die DGPS-Korrekturdaten mit bekannten Einrichtungen empfangen. Dabei werden von einem elektronischen Empfangsmodul (Receiver Modul) diese Daten an eine bekannte digitale Verarbeitungsstufe (RTCM-Modul "Radio Technical Commission for Martime Services") zur standartisierten Weitergabe der Daten an einen bekannten DGPS-fähigen GPS-Empfänger geleitet. Dieser GPS-Empfänger wird in bekannter Weise zusätzlich mit Satellitendaten gespeist und bestimmt damit den Standort des Nutzers. Die Genauigkeit des Positionswertes liegt bei ca. 5 m, wenn der Nutzer sich in einem Umkreis bis ca. 600 km von der Referenzstation befindet. Für viele Anwendungsbereiche, z.B. Landwirtschaft, Geo-Informations-Systeme (GIS), Gleiserkennung im Schienenverkehr, ist dieser Wert jedoch zu ungenau. Aus diesem Grunde wird die im GPS-Empfänger ermittelte und im NMEA-Format (National Marine Electronics Association) ausgegebene Position des Nutzers in einem NMEA-Modul eingelesen und an ein ADCo-Modul weitergeleitet. In diesem ADCo-Modul wird die eingelesene Position des Nutzers nun im nachhinein genauer bestimmt. Dazu wird eine empirisch ermittelte Korrekturgröße herangezogen.

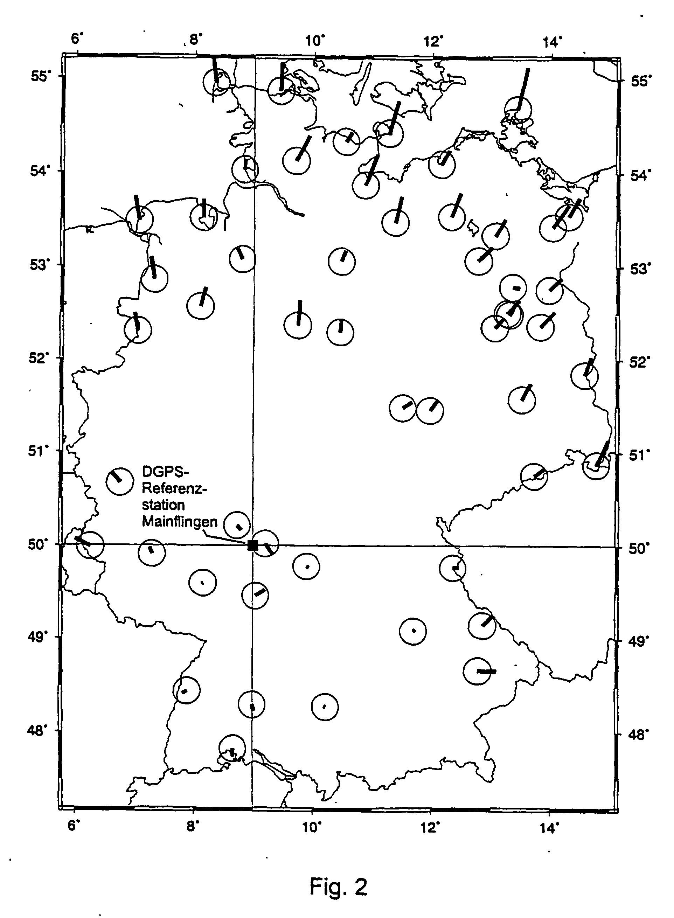

Bei der Ermittlung der Korrekturgröße wurden Messungen gemäß Fig. 2, verteilt über die ganze Bundesrepublik, genutzt. Diese Messungen wurden auf geodätisch bestimmten Punkten höchster Genauigkeit (DREF-Punkte "Deutsches Referenznetz") ausgeführt, so daß in Bezug auf diese Soll-Punkte zuverlässige Abweichungen vorliegen. Die Mittelwerte der DGPS-Positionen entstanden aus jeweils 400 bis 600 Einzelwerten auf der Basis 20- bis 30-minütiger Messungen oder aus wesentlich mehr Einzelwerten bei Messungen über mehrere Stunden. Diese Mittelwerte haben in der Ebene eine systematische Ablage zum Sollpunkt (2D-Ablage).

Der Korrelationskoeffizient zwischen den azimutalen Komponenten der 2D-Ablagen und den dazugehörigen Entfernungen zur Referenzstation ergibt einen Wert von ca. +0.75 bei einer Stichprobengröße von etwa 70 Messungen. Dieser Wert des Korrelationskoeffizienten berechtigt zur Bestimmung der Regressionsgeraden (Korrekturlinie). zwischen den azimutalen Komponenten der 2D-Ablage und den dazugehörigen Entfernungen zur Referenzstation.

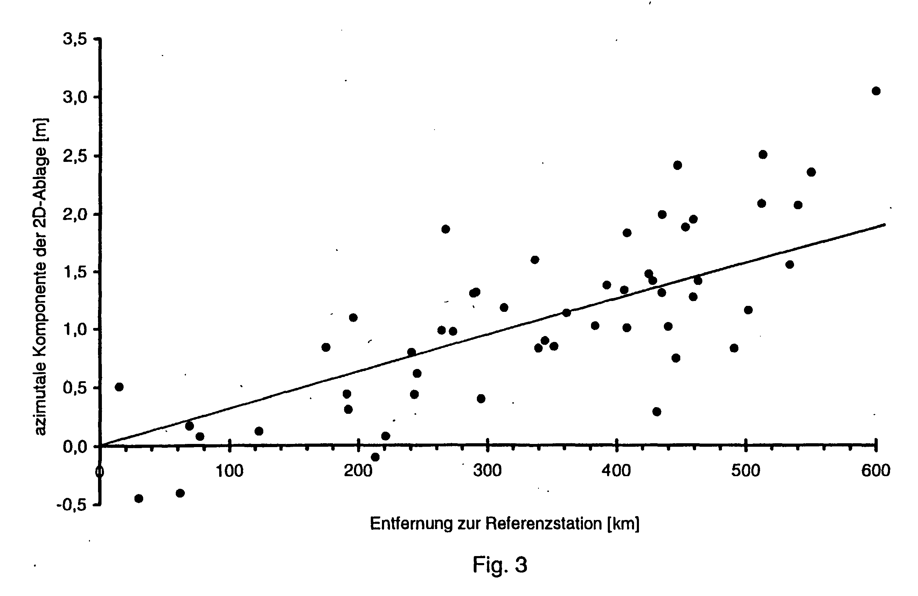

An der auf diese Weise bestimmten Korrekturlinie nach Fig. 3 wird nun der Wert der Korrekturgröße für eine bestimmte Größe der Entfernung von der Referenzstation abgelesen und von der eingelesenen Position des Nutzers in Richtung auf die Referenzstation zu abgetragen.

Der Korrelationskoeffizient zwischen den korrigierten Ablagen und den Entfernungen Referenzstation - Nutzerposition liegt bei +0.40, das heißt, die Hauptkomponente der Ablagen ist durch die Azimuth-Distance-Correction (ADCo) kompensiert. Die Restabweichungen übersteigen nur zweimal ca. 1,2 m.

Diese Korrektion kann für jede DGPS-Messung berechnet und an das Resultat dieser Messung angebracht werden. Die Ausgabe der im ADCo-Modul neu berechneten Position erfolgt wahlweise auf dem Display und/oder der Datenschnittstelle zur weiteren Benutzung.
Es ist denkbar und im Sinne der Erfindung, daß die Ermittlung der Werte für eine Korrektur in vertikaler Richtung in gleicher Weise erfolgt.

## Patentansprüche

1. Empfangssystem zur GPS-Positionsbestimmung unter Anwendung der Azimuth-Distance-Correction-ADCo-, wobei das System die von einer DGPS-Referenzstation ausgesendeten DGPS-Korrekturdaten über ein Receiver- und RTCM-Modul einem GPS-Empfänger zuführt und der GPS-Empfänger mit seinen zusätzlich empfangenen Satellitendaten den Standort des Nutzers bestimmt und diesen Standort über ein NMEA-Modul weiterleitet, **dadurch gekennzeichnet, daß** die vom NMEA-Modul eingelesenen Positionswerte in einem ADCo-Modul weiterbearbeitet werden, indem eine weitere Korrekturgröße einbezogen wird, die aus einer, für diese Anwendung empirisch aus vielen Messreihen für die Beziehung zwischen den Positionsfehlern der DGPS-Korrekturdaten in azimutaler Richtung - azimutale Komponente - und den dazu gehörenden Entfernungen zur Referenzstation bestimmten Korrekturlinie abgelesen wird und die eingelesene Position des Nutzers in Richtung auf die Referenzstation zu korrigiert, und dieser korrigierte Positionswert an den Nutzer über eine Datenschnittstelle und/oder an ein Display weitergeleitet wird.

2. Empfangssystem nach Anspruch 1, **dadurch gekennzeichnet, daß** die Korrekturlinie aufgrund der hohen Korrelation mit einem Koeffizienten von ca. + 0,75 zwischen den azimutalen Komponenten der DGPS-Korrekturdaten und den dazugehörenden Entfernungen zur Referenzstation als Regressionsgerade dargestellt werden kann.

3. Empfangssystem nach Anspruch 1 und 2, **dadurch gekennzeichnet, daß** die Korrekturgröße aus den Mittelwerten der von der Referenzstation gemessenen DGPS-Positionsdaten in Bezug auf geodätisch bestimmten Punkten höchster Genauigkeit als entfernungsabhängige Größe erkannt wurde, die bei einer zweidimensionalen Ablage der DGPS-Positionsdaten die Hauptkomponente in azimutaler Richtung, für eine Korrektur in Richtung zur Referenzstation, aufweist.

## Claims

1. Receiving system for GPS position determination using azimuth distance correction - ADCo - wherein the system feeds the DGPS correction data transmitted by a DGPS reference station to a GPS receiver through a receiver-and-RTCM-module, and the GPS receiver determines the position of the user with additional received satellite data and forwards this position through an NMEA module, **characterized in that** the position values read in by the NMEA module are further processed in an ADCo module by the means that an additional correction quantity is included that is read from a correction line empirically determined for this application from many series of measurements for the relationship between the position errors of the DGPS correction data in the azimuthal direction - azimuthal components - and the associated distances from the reference station, and the read-in position of the user is corrected in the direction of the reference station, and this corrected position value is forwarded to the user through a data interface and/or to a display.

2. Receiving system according to claim 1, **characterized in that** the correction line can be represented as a regression line on account of the high correlation with a coefficient of approximately +0.75 between the azimuthal components of the DGPS correction data and the associated distances from the reference station.

3. Receiving system according to any one of claims 1 or 2, **characterized in that** the correction quantity was detected from the mean values of the DGPS position data measured by the reference station with respect to geodetically determined points of maximum precision as a distance-dependent quantity that has the primary component in the azimuthal direction in the case of a two-dimensional arrangement of the DGPS position data for a correction in the direction toward the reference station.

## Revendications

1. Système de réception pour la détermination de position à GPS en utilisant la correction distance-azimut - ADCo, le système dirigeant, par l'intermédiaire d'un module récepteur et RTCM, les données de correction DGPS émises d'une station de référence DGPS, vers un récepteur GPS qui, moyennant les données satellites reçues en plus, détermine le site de l'utilisateur et le transmet par l'intermédiaire d'un module NMEA,
**caractérisé en ce que** les valeurs de position récupérées par le module NMEA sont post-traitées dans un module ADCo en y intégrant une autre grandeur de correction, lue à partir d'une ligne de correction qui est déterminée, pour cette application, de manière empirique à partir d'une pluralité de séries de mesure pour la relation entre les erreurs de position des données de correction DGPS dans la direction azimutale - composante azimutale - et les distances par rapport à la station de référence qui leur sont associées, et qui corrige, en direction de la station de référence, la position de l'utilisateur récupérée, et **en ce que** cette valeur de position corrigée est transmise à l'utilisateur par l'intermédiaire d'une interface de données et/ou un afficheur.

2. Système de réception selon la revendication 1,
**caractérisé en ce qu'**en raison de la corrélation élevée d'un coefficient d'environ +0,75 entre les composantes azimutales des données de correction DGPS et les distances par rapport à la station de référence qui leur sont associées, la ligne de correction est susceptible d'être représentée comme ligne droite de régression.

3. Système de réception selon les revendications 1 et 2,
**caractérisé en ce que** la grandeur de correction obtenue à partir des moyennes des données de position DGPS mesurées par la station de référence, a été détectée comme grandeur dépendant de la distance relativement à des points définis géodésiquement d'une exactitude maximale qui, dans le cas d'un décalage bidimensionnel des données de position DGPS, comporte la composante principale dans la direction azimutale, pour une correction en direction de la station de référence.
